# FASCICULE DE BREVET EUROPEEN

(11) **EP 2 438 112 B1**
(45) Date de publication et mention de la délivrance du brevet: **18.03.2020**
(21) Numéro de dépôt: 10724477.4
(22) Date de dépôt: 02.06.2010
(51) Int. Cl.: C08K 3/36, C08K 5/54

(54) **UTILISATION COMME AGENT DE COUPLAGE, DANS UNE COMPOSITION D'ELASTOMERE(S) ISOPRENIQUE(S) COMPRENANT UNE CHARGE INORGANIQUE RENFORCANTE, D'UN COMPOSE ORGANOSILICIQUE FONCTIONNALISE PARTICULIER**
VERWENDUNG EINER SPEZIELLEN ORGANOSILIZIUMVERBINDUNG ALS HAFTVERMITTLER IN EINER ELASTOMER-ZUSAMMENSETZUNG, DIE EINEN ANORGANISCHEN VERSTÄRKUNGSFÜLLSTOFF ENTHÄLT
USE OF A PARTICULAR ORGANOSILICIUM COMPOUND AS A COUPLING AGENT IN AN ELASTOMER COMPOSITION COMPRISING AN INORGANIC REINFORCING FILLER

(30) Priorité: 02.06.2009 FR 0902646
(43) Date de publication de la demande: 11.04.2012
(73) Titulaire: Rhodia Opérations, 75009 Paris (FR)
(72) Inventeur: GUY, Laurent, F-69140 Rillieux la Pape (FR); PEVERE, Virginie, F-69008 Lyon (FR); VIDAL, Thierry, F-69003 Lyon (FR)
(74) Mandataire: Banfi, Gaia
(86) Numéro de dépôt international: PCT/EP2010/057739
(87) Numéro de publication internationale: WO 2010/139743

(56) Documents cités:
- EP-A- 1 072 442
- EP-A- 1 132 423
- EP-A1- 2 182 028
- WO-A-02/10265
- US-A- 4 820 751
- US-A1- 2008 319 151

## Description

L'invention concerne l'utilisation de composés organosiliciques (silanes) particuliers comme agents de couplage charge inorganique - élastomère dans des compositions d'élastomère(s) comprenant un élastomère isoprénique, tel que le caoutchouc naturel, et une charge inorganique à titre de charge renforçante, telle qu'une silice précipitée, notamment hautement dispersible.

Elle est également relative aux compositions d'élastomères correspondantes et aux articles, notamment des pneumatiques, comprenant de telles compositions.

Il est connu que les articles en élastomère(s) sont généralement soumis à des contraintes variées, par exemple telles qu'une variation de température, une variation de sollicitation de fréquence importante en régime dynamique, une contrainte statique importante et/ou une fatigue en flexion non négligeable en régime dynamique. De tels articles sont par exemple des pneumatiques, des semelles de chaussures, des revêtements de sols, des bandes de convoyeur, des courroies de transmission de puissance, des tuyaux flexibles, des joints, notamment des joints d'appareils électroménagers, des supports jouant le rôle d'extracteurs de vibrations de moteurs soit avec des armatures métalliques, soit avec un fluide hydraulique à l'intérieur de l'élastomère, des gaines de cables, des cables, des galets de téléphériques.

Il a été alors proposé d'utiliser notamment des compositions d'élastomère(s) renforcées par des charges inorganiques spécifiques qualifiées de « renforçantes », présentant de préférence une haute dispersibilité. Ces charges, en particulier les charges blanches comme les silices précipitées, sont capables de rivaliser avec ou même de dépasser au moins du point de vue renforçant le noir de carbone employé conventionnellement, et offrent en outre à ces compositions une hystérèse généralement plus basse, synonyme notamment d'une diminution de l'échauffement interne des articles en élastomère(s) lors de leur utilisation.

Il est connu de l'homme du métier qu'il est généralement nécessaire d'employer dans les compositions d'élastomère(s) contenant de telles charges renforçantes un agent de couplage, encore appelé agent de liaison, qui a pour fonction notamment d'assurer la connexion entre la surface des particules de charge inorganique (préférentiellement une silice précipitée, en particulier hautement dispersible) et l'(les) élastomère(s), tout en facilitant la dispersion de cette charge inorganique au sein de la matrice élastomérique.

Par agent de couplage charge inorganique - élastomère, on entend de manière connue un agent apte à établir une connexion suffisante, de nature chimique et/ou physique, entre la charge inorganique et l'élastomère.

Un tel agent de couplage, au moins bifonctionnel, a par exemple comme formule générale simplifiée « N-V-M », dans laquelle :
- N représente un groupe fonctionnel (fonction "N") capable de se lier physiquement et/ou chimiquement à la charge inorganique, une telle liaison pouvant être établie, par exemple, entre un atome de silicium de l'agent de couplage et les groupes hydroxyles (OH) de la surface de la charge inorganique (par exemple les silanols de surface lorsqu'il s'agit de silice) ;
- M représente un groupe fonctionnel (fonction "M") capable de se lier physiquement et/ou chimiquement à l'élastomère, notamment par l'intermédiaire d'un atome ou d'un groupe d'atomes appropriés (par exemple un atome de soufre) ;
- V représente un groupe (divalent/hydrocarboné) permettant de relier "N" et "M".

Les agents de couplage ne doivent pas être confondus avec de simples agents de recouvrement de charge inorganique qui, de manière connue, peuvent comporter la fonction "N" active vis-à-vis de la charge inorganique mais sont dépourvus de la fonction "M" active vis-à-vis de l'élastomère.

Des agents de couplage, notamment (silice - élastomère), ont été décrits dans de nombreux documents de l'état de la technique, les plus connus étant des silanes (poly)sulfurés, en particulier des alkoxysilanes (poly)sulfurés. Parmi ces silanes (poly)sulfurés, on peut citer notamment le tétrasulfure de bis-triéthoxysilylpropyle (en abrégé TESPT), qui est généralement encore considéré aujourd'hui comme un produit apportant, pour des vulcanisats comprenant une charge inorganique à titre de charge renforçante, telle que de la silice, un très bon, voire le meilleur, compromis en terme de sécurité au grillage, de facilité de mise en oeuvre et de pouvoir renforçant.

L'utilisation combinée de silice précipitée, en particulier hautement dispersible et d'un silane (ou composé organosilique fonctionnalisé) polysulfuré dans une composition d'élastomère(s) modifié(s) a permis le développement du « pneu vert » pour les véhicules tourisme (véhicules légers). Cette combinaison a permis d'atteindre une performance de résistance à l'usure comparable à celle des mélanges d'élastomères renforcés par de noir de carbone, tout en améliorant de manière significative la résistance au roulement (d'où une baisse de la consommation de carburant), et l'adhérence sur sol humide.

Il serait donc intéressant de pouvoir également utiliser une charge inorganique comme la silice dans les pneus pour poids lourds, pneus qui sont obtenus à partir de compositions à base d'élastomère(s) isoprénique(s), principalement le caoutchouc naturel.

Cependant la même combinaison silice / silane polysulfuré appliquée à un élastomère isoprénique comme le caoutchouc naturel n'a pas permis d'obtenir un niveau de renforcement (qui peut être illustré par une courbe contrainte - allongement en traction uniaxiale) suffisant par rapport à ce qui est obtenu lorsque l'on emploie du noir de carbone comme charge, ce renforcement en retrait conduisant à une médiocre résistance à l'usure.

Le but de la présente invention est de proposer notamment des agents de couplage, consistant en une alternative aux agents de couplage connus, pour les compositions d'élastomère(s) comprenant un élastomère isoprénique, tel que le caoutchouc naturel, et une charge inorganique renforçante, en particulier une charge blanche telle que de la silice précipitée, de préférence hautement dispersible, ces agents de couplages leur procurant de plus un compromis de propriétés très satisfaisant, en particulier au niveau de leurs propriétés rhéologiques, mécaniques et/ou dynamiques, notamment hystérétiques. De manière avantageuse, ils permettent une amélioration du compromis hystérèse/renforcement.

L'invention concerne une composition d'élastomère(s) selon la revendication 1, un article selon la revendication 9 et une utilisation selon la revendication 11.

L' agent de couplage charge inorganique - élastomère selon l'invention est au moins un composé organosilicique fonctionnalisé (silane), caractérisée en ce que ledit composé répond à l'une des formules (Ia), (Ib), (Ic), (Id), (IIIa), (IVa), (VIa), (VIb), (VIc), (VIIa) suivantes : 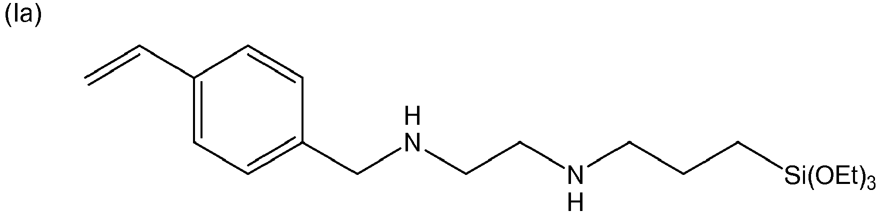 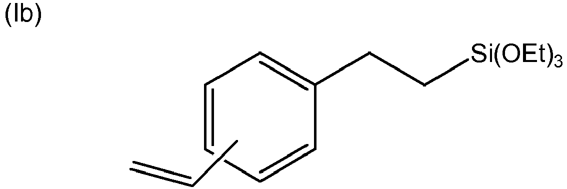 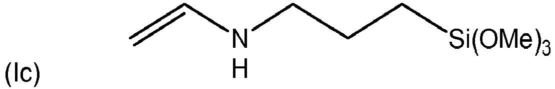 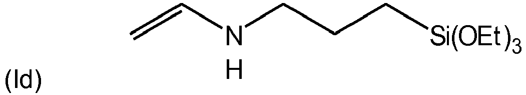 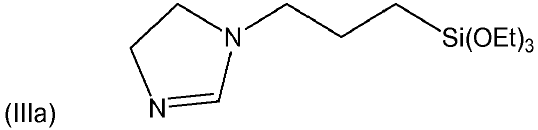 (N-(3-triéthoxysilylpropyl)-4,5-dihydroimidazole)

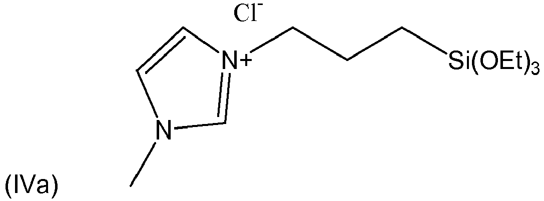

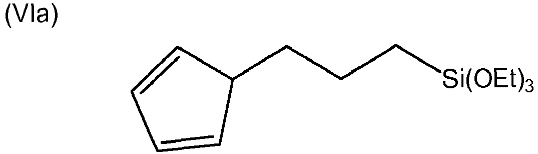

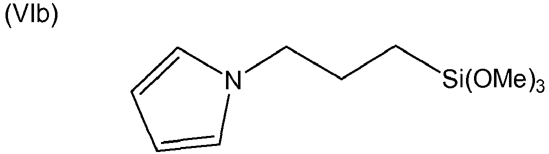

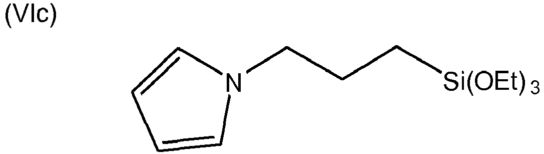

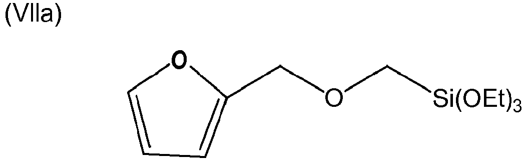

De manière très préférée, on met en œuvre selon l'invention le composé de formule (IIIa)((N-(3-triéthoxysilylpropyl)-4,5-dihydroimidazole).

Les composés organosiliciques fonctionnalisés (silanes) mis en œuvre dans l'invention peuvent etre préparés par des méthodes connues, comportant une ou plusieurs étapes de synthèse, notamment à partir de matières premières alkoxysilanes déjà fonctionnalisées et largement disponibles dans le commerce, par exemple chloroalkylalkoxysilane, aminoalkylalkoxysilane, aminoalkylaminoalkylalkoxysilane.

Par exemple, les composés de formule (ia) peut être préparé partir d'aminoalkylalkoxysilane ou d'aminoalkylaminoalkylalkoxysilane par réaction avec un composé du type chlorure de vinylbenzyl (ou un de ses dérivés)

Le composé de formule (IIIa) peut être obtenu à partir d'aminoalkylaminoalkylalkoxysilane et d'un dérivé orthoformiate (tel qu'un orthoformiate d'alkyle). Le composé de formule (IVa), de type imidazolinium, peut être préparé par substitution nucléophile de l'imidazole sur un halogénoalkylsilane.

Le caoutchouc naturel (poly(cis-1,4-isoprène)) est un élastomère qui, sous l'effet conjugué de la température et du cisaillement mécanique au cours de l'étape de mélange lors de la préparation de la formulation élastomérique, conduit à un mécanisme radicalaire de scissions des motifs isoprènes constitutifs de la chaîne et donc de réduction de la viscosité.

Le Demandeur a trouvé de manière inattendue que les agents de couplage mis en œuvre selon l'invention permettent, d'une part, de ne pas générer de réactions radicalaires supplémentaires et/ou de stabiliser les radicaux formés au cours de l'étape de mélange, et, d'autre part, de pouvoir créer un lien covalent entre la charge inorganique, telle que la silice, et les motifs isoprènes de l'élastomère.

De manière avantageuse, les agents de couplage mis en œuvre dans la présente invention sont efficaces en termes de réactivité et simples d'utilisation au niveau industriel.

Dans le présent exposé, on entend par "charge inorganique" ou par "charge inorganique renforçante" une charge inorganique ou minérale, quelle que soit son origine (naturelle ou synthétique), encore appelée charge blanche ou charge claire, capable de renforcer à elle seule, sans autre moyen que celui d'un agent de couplage, une composition d'élastomère(s), naturels(s) et/ou synthétique(s).

L'état physique dans lequel se présente la charge inorganique renforçante peut être quelconque, c'est-à-dire que ladite charge peut se présenter par exemple sous forme de poudre, de granulé ou de microperles.

En général, la charge inorganique renforçante mise en œuvre dans l'invention est formée par de la silice, de l'alumine, de l'hydroxyde d'aluminium, de l'aluminosilicate, de l'oxyde de titane, du noir de carbone recouvert totalement ou partiellement par de la silice et/ou de l'alumine, ou un mélange de ces espèces, notamment de silice et d'alumine.

De manière préférentielle, la charge inorganique renforçante est formée par de la silice.

A titre de silice susceptible d'être mise en œuvre dans l'invention conviennent notamment toutes les silices précipitées ou pyrogénées, en particulier celles présentant une surface spécifique BET inférieure ou égale à 450 m²/g.

Selon une variante préférée, on utilise une silice précipitée, celle-ci pouvant être classique ou, de manière avantageuse, (hautement) dispersible.

Par silice hautement dispersible, on entend en particulier toute silice ayant une aptitude à la désagglomération et à la dispersion dans une matrice polymérique très importante, notamment observable par microscopie électronique ou optique, sur coupes fines.

On peut par exemple employer une silice hautement dispersible présentant une surface spécifique CTAB égale ou inférieure à 450 m²/g, en particulier comprise entre 50 et 350 m²/g.

On peut mettre en œuvre une silice conforme à l'une des demandes EP-A-0520862, WO-A-95/09127, WO-A-95/09128, WO-A-98/54090 et WO-A-03/016215.

Comme exemples non limitatifs de silices dispersibles, on peut citer la silice Perkasil KS 430 de la société Akzo, les silices BV3380 et Ultrasil 7000 de la société Evonik, les silices Zeosil 1165 MP et 1115 MP, HRS 1200 MP et Zeosil Premium 200 MP de la société Rhodia, la silice Hi-Sil 2000 de la société PPG, la silice Zeopol 8745 de la société Huber.

Conviennent aussi les silices précipitées traitées, telles que par exemple les silices contenant de l'aluminium décrites dans les demandes de brevet EP-A-0735088, 0762992 et 0762993.

A titre plus particulier, conviennent bien les silices précipitées possédant :
une surface spécifique CTAB comprise entre 60 et 280 m²/g, en particulier entre 70 et 250 m²/g, notamment entre 100 et 240 m²/g, par exemple entre 110 et 190 m²/g,
une surface spécifique BET comprise entre 60 et 300 m²/g, en particulier entre 70 et 280 m²/g, notamment entre 100 et 250 m²/g, par exemple entre 110 et 200 m²/g,
éventuellement, une prise d'huile DOP inférieure à 300 ml/100g, par exemple comprise entre 200 et 295 ml/100g, et
éventuellement, un rapport surface spécifique BET / surface spécifique CTAB compris entre 1,0 et 1,6.

Par silice, on entend également des coupages de différentes silices.

La surface spécifique CTAB est la surface externe, pouvant être déterminée selon la méthode NF T 45007 (novembre 1987). La surface spécifique BET peut être mesurée selon la méthode de BRUNAUER - EMMETT - TELLER décrite dans "The Journal of the American Chemical Society", vol. 60, page 309 (1938) et correspondant à la norme NF T 45007 (novembre 1987). La prise d'huile DOP peut être déterminée selon la norme ISO 787/5 en mettant en oeuvre le dioctylphtalate.

A titre d'alumine renforçante, on peut utiliser une alumine dispersible ayant :
une surface spécifique BET comprise entre 30 et 400 m²/g, par exemple entre 60 et 250 m²/g,
une taille moyenne de particules au plus égale à 500 nm, par exemple au plus égale à 200 nm, et
un taux élevé de fonctions réactives de surface Al-OH,
telle que décrite dans la demande de brevet EP-A-0810258.

Comme exemples non limitatifs d'alumines renforçantes, on peut citer notamment les alumines A125, CR125, D65CR de la société Baïkowski.

Le composé organosilicique fonctionnalisé employé selon la présente invention à titre d'agent de couplage peut être mélangé préalablement avec la charge inorganique employée comme charge renforçante, notamment lorsque celle-ci est de la silice précipitée, en particulier de haute dispersibilité. Ledit composé organosilicique peut être en effet préalablement greffé sur la charge inorganique renforçante qui se retrouvera ainsi "précouplée" avant son mélange avec la composition d'élastomère(s).

Il est possible d'employer tout ou partie du composé organosilicique fonctionnalisé utilisé selon l'invention à titre d'agent de couplage sous forme supportée (la mise sur support étant réalisée préalablement à son utilisation) sur un solide compatible avec la structure chimique correspondant à ce composé organosilicique fonctionnalisé, ce support solide pouvant être par exemple du noir de carbone.

Les compositions d'élastomère(s) dans lesquelles sont utilisés selon l'invention les agents de couplage décrits ci-dessus peuvent contenir au moins un agent de recouvrement de la charge inorganique employée à titre de charge renforçante. Cet agent de recouvrement est susceptible, de manière connue, d'améliorer la faculté de mise en œuvre des compositions d'élastomère(s) à l'état cru. Un tel agent de recouvrement peut consister par exemple en un alkylalkoxysilane (notamment un alkyltriéthoxysilane), un polyol, un polyéther (en particulier un polyéthylèneglycol), un polyétheramine, une amine primaire, secondaire ou tertiaire (notamment une trialcanol-amine), un polydiméthylsiloxane α,ω-dihydroxylé ou un polydiméthylsiloxane α,ω-diaminé.

Les compositions d'élastomère(s) dans lesquelles sont utilisés selon l'invention les agents de couplage décrits ci-dessus peuvent comprendre au moins un autre agent de couplage charge inorganique (notamment charge blanche renforçante telle que de la silice précipitée, en particulier hautement dispersible) - élastomère, de préférence un silane sulfuré ou polysulfuré.

On peut citer comme exemples d'un tel agent de couplage :
- le disulfure de bis-triéthoxysilylpropyle (en abrégé TESPD) de formule :

   (C₂H₅O)₃Si-(CH₂)₃-S₂-(CH₂)₃-Si(OC₂H₅)₃
- le tétrasulfure de bis-triéthoxysilylpropyle (en abrégé TESPT) de formule :

   (C₂H₅O)₃Si-(CH₂)₃-S₄-(CH₂)₃-Si(OC₂H₅)₃
- le tétrasulfure de bis- monohydroxydiméthylsilylpropyle de formule :

   (HO)(CH₃)₂Si-(CH₂)₃-S₄-(CH₂)₃-Si(CH₃)₂(OH)
- le disulfure de bis-monoéthoxydiméthylsilylpropyle (en abrégé MESPD) de formule :

   (C₂H₅O)(CH₃)₂Si-(CH₂)₃-S₂-(CH₂)₃-Si(CH₃)₂(OC₂H₅)
- le tétrasulfure de bis-monoéthoxydiméthylsilylpropyle (en abrégé MESPT) de formule :

   (C₂H₅O)(CH₃)₂Si-(CH₂)₃-S₄-(CH₂)₃-Si(CH₃)₂(OC₂H₅)
- le tétrasulfure de bis-monoéthoxydiméthylsilylisopropyle (en abrégé MESiPrT) de formule :

   (C₂H₅O)(CH₃)₂Si-CH₂-CH-(CH₃)-S₄-(CH₃)-CH-CH₂-Si(CH₃)₂(OC₂H₅)

Les silanes sulfurés ou polysulfurés peuvent être préparés selon divers procédés de synthèse connus, décrits dans de nombreux documents, par exemple : EP-A-0680997, EP-A- 0945556, EP-A-1043357, WO-A-02/30939, WO-A-03/053983.

Des silanes sulfurés ou polysulfurés sont disponibles dans le commerce : le TESPD est par exemple commercialisé par la société Dow Corning sous la dénomination Z-6920, par la société Evonik sous la dénomination Si75, ou par la société Momentive sous la dénomination Silquest A1589 ; le TESPT est par exemple commercialisé par la société Dow Corning sous la dénomination Z-6940, par la société Evonik sous la dénomination Si69 (ou X50S lorsqu'il est supporté à 50 % en poids sur du noir de carbone), ou par la société Momentive sous la dénomination Siquest A1289.

La composition d'élastomère(s) mise en œuvre selon l'invention comprend généralement au moins un élastomère isoprénique (naturel ou synthétique) choisi parmi :
(1) les polyisoprènes de synthèse obtenus par homopolymérisation de l'isoprène ou méthyl-2 butadiène-1,3 ;
(2) les polyisoprènes de synthèse obtenus par copolymérisation de l'isoprène avec un ou plusieurs monomères insaturés éthyléniquement choisis parmi :
   (2.1) les monomères diènes conjuguées, autres que l'isoprène, ayant de 4 à 22 atomes de carbone ;
   (2.2) les monomères vinyles aromatiques ayant de 8 à 20 atomes de carbone ;
   (2.3) les monomères nitriles vinyliques ayant de 3 à 12 atomes de carbone ;
   (2.4) les monomères esters acryliques dérivés de l'acide acrylique ou de l'acide méthacrylique avec des alcanols ayant de 1 à 12 atomes de carbone ;
   (2.5) un mélange d'au moins deux des monomères précités (2.1) à (2.4) ; les polyisoprènes copolymères contenant entre 20 et 99 % en poids d'unités isopréniques et entre 80 et 1 % en poids d'unités diéniques, vinyles aromatiques, nitriles vinyliques et/ou esters acryliques, et consistant par exemple dans le poly(isoprène-butadiène), le poly(isoprène-styrène) et le poly(isoprène-butadiène-styrène) ;
(3) le caoutchouc naturel ;
(4) les copolymères obtenus par copolymérisation d'isobutène et d'isoprène (caoutchouc butyle), ainsi que les versions halogénées, en particulier chlorées ou bromée, de ces copolymères ;
(5) un mélange d'au moins deux des élastomères précités (1) à (4) ;
(6) un mélange contenant plus de 50 % (de préférence moins de 99,5 %, et par exemple entre 70 et 99%) en poids d'élastomère précité (1) ou (3) et moins de 50 % (de préférence plus de 0,5 %, et par exemple entre 1 et 30 %) en poids d'un ou plusieurs élastomères diéniques autres qu'isopréniques.

Par élastomère diénique autre qu'isoprénique, on entend de manière connue en soi notamment : les homopolymères obtenus par polymérisation d'un des monomères diènes conjugués définis ci-dessus au point (2.1), comme par exemple le polybutadiène et le polychloroprène ; les copolymères obtenus par copolymérisation d'au moins deux des diènes conjugués précités (2.1) entre eux ou par copolymérisation d'un ou plusieurs des diènes conjugués précités (2.1) avec un ou plusieurs monomères insaturés précités (2.2), (2.3) et/ou (2.4), comme par exemple le poly(butadiène-styrène) et le poly(butadiène-acrylonitrile) ; les copolymères ternaires obtenus par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'héthylidène-norbornène, le dicyclopentadiène (élastomère EPDM).

La composition d'élastomère(s) mise en œuvre selon l'invention peut comprendre au moins un élastomère isoprénique (par exemple du caoutchouc naturel) et au moins un élastomère diénique autre qu'isoprénique, la quantité d'élastomère isoprénique par rapport à la quantité totale d'élastomère(s) étant de préférence supérieure à 50 % (en général inférieure à 99,5 %, et par exemple comprise entre 70 et 99 %) en poids.

A titre préférentiel, la composition d'élastomère(s) comprend au moins un élastomère isoprénique choisi parmi :
(1) les polyisoprènes de synthèse homopolymères ;
(2) les polyisoprènes de synthèse copolymères consistant dans le poly(isoprène-butadiène), le poly(isoprène-styrène) et le poly(isoprène-butadiène-styrène) ;
(3) le caoutchouc naturel ;
(4) le caoutchouc butyle ;
(5) un mélange d'au moins deux des élastomères précités (1) à (4) ;
(6) un mélange contenant plus de 50 % (de préférence moins de 99,5 %, et par exemple entre 70 et 99%) en poids d'élastomère précité (1) ou (3) et moins de 50 % (de préférence plus de 0,5 %, et par exemple entre 1 et 30 %) en poids d'élastomère diénique autre qu'isoprénique consistant dans le polybutadiène, le polychloroprène, le poly(butadiène-styrène), le poly(butadiène-acrylonitrile) ou un terpolymère (éthylène-propylène-diène monomère non conjugué).

A titre plus préférentiel, la composition d'élastomère(s) comprend au moins un élastomère isoprénique choisi parmi : (1) les polyisoprènes de synthèse homopolymères ; (3) le caoutchouc naturel ; (5) un mélange des élastomères précités (1) et (3) ; (6) un mélange contenant plus de 50 % (de préférence moins de 99,5 %, et par exemple entre 70 et 99 %) en poids d'élastomère précité (1) ou (3) et moins de 50 % (de préférence plus de 0,5 %, et par exemple entre 1 et 30 %) en poids d'élastomère diénique autre qu'isoprénique consistant dans le polybutadiène et le poly(butadiène-styrène).

Selon une variante très préférée de l'invention, la composition d'élastomère(s) comprend à titre d'élastomère isoprénique au moins du caoutchouc naturel, voire uniquement du caoutchouc naturel.

En général, la composition d'élastomère(s) mise en œuvre selon l'invention comprend en outre tout ou partie des autres constituants et additifs auxiliaires habituellement employés dans le domaine des compositions élastomériques.

Ainsi, généralement, elle comprend au moins un composé choisi parmi les agents de vulcanisation (par exemple le soufre ou un composé donneur de soufre (tel qu'un dérivé de thiurame), les accélérateurs de vulcanisation (par exemple un dérivé de guanidine ou un dérivé de thiazoles), les activateurs de vulcanisation (par exemple l'oxyde de zinc, l'acide stéarique et le stéarate de zinc), le noir de carbone, les agents protecteurs (notamment les agents antioxydants et/ou les agents antiozonants, tels que par exemple la N-phényl-N'-(diméthyl-1,3 butyl)-p-phénylène-diamine, les agents de plastification.

L'utilisation selon l'invention des composés organosiliques fonctionnalisés particuliers décrits dans l'exposé précédent peut se faire plus particulièrement dans les semelles de chaussures, les revêtements de sols, les barrières aux gaz, les matériaux ignifugeants, les galets de téléphériques, les joints d'appareils électroménagers, les joints de conduites de liquides ou de gaz, les joints de système de freinage, les gaines, les cables, les courroies de transmissions ou, de préférence, les pneumatiques, de manière avantageuse dans les pneumatiques pour les véhicules poids lourds.

La composition d'élastomère(s) obtenue selon l'utilisation conforme à l'invention contient une quantité efficace d'au moins un composé organosilicique fonctionnalisé décrit précédemment.

Plus particulièrement, les compositions d'élastomères issues de l'invention peuvent comprendre (parties en poids), pour 100 parties d'élastomère(s) isoprénique(s) :
10 à 200 parties, en particulier 20 à 150 parties, notamment 30 à 110 parties, par exemple 30 à 75 parties, de charge inorganique renforçante ;
1 à 20 parties, en particulier 2 à 20 parties, notamment 2 à 12 parties, par exemple 2 à 10 parties, de composé(s) organosilicique(s) fonctionnalisé(s) décrit(s) dans l'exposé précédent utilisé(s) selon l'invention comme agent(s) de couplage.

De préférence, la quantité d'agent(s) de couplage, choisie notamment dans les plages précitées, est déterminée de manière à qu'elle représente en général 1 à 20 %, en particulier 2 à 15 %, par exemple 4 à 12 %, en poids par rapport au poids de la charge inorganique renforçante.

En général, les quantités totales d'agents de couplage (+ éventuel agent de recouvrement) sont identiques à celles mentionnées ci-dessus lorsque l'on emploie, en plus de l'agent de couplage utilisé selon l'invention, un autre agent de couplage (notamment sulfuré ou polysulfuré) et/ou un agent de recouvrement.

Les compositions d'élastomère(s) selon l'invention peuvent être préparées selon tout mode opératoire classique en deux phases. Une première phase (dite non-productive) est une phase de travail thermomécanique à haute température. Elle est suivie d'une seconde phase de travail mécanique (dite productive) à des températures généralement inférieures à 110 °C dans laquelle on introduit le système de vulcanisation.

L'invention concerne les compositions
d'élastomère(s) tant à l'état cru (c'est-à-dire avant cuisson) qu'à l'état cuit (c'est-à-dire après réticulation ou vulcanisation).

Les compositions d'élastomère(s) selon l'invention peuvent servir à fabriquer des articles, finis ou semi-finis, comprenant lesdites compositions.

La présente invention a ainsi pour objet des articles comprenant au moins une composition d'élastomère(s) telle que définie ci- dessus, ces articles consistant dans des semelles de chaussures, des revetements de sols, des barrières aux gaz, des matériaux ignifugeants, des galets de téléphériques, des joints d'appareils électroménagers, des joints de
conduites de liquides ou de gaz, des joints de système de freinage, des tuyaux (flexibles), des gaines de cables, des cable, des supports de moteur, des bandes de convoyeur, des courroie de transmissions, ou, de préférence, des pneumatiques, avantageusement des pneumatiques pour les véhicules poids lourds.

Les exemples suivants illustrent l'invention sans toutefois en limiter la portée.

### EXEMPLES

Les exemples 1-5 illustrent la préparation de composés organosiliciques fonctionnalisés (silanes) conformes à ceux utilisés dans la présente invention.

### EXEMPLE 1

### Triéthoxy(4-vinylphénéthyl)silane (conforme à la formule (I))

A une suspension de sels de palladium PdCl₂(PPh₃)₂ (0,5 g, 0,7 mmol) dans du 1,4-divinylbenzène (39 g, 0,3 mol) sont additionnés en 1 heure 36,1 g de trichlorosilane (HSiCl₃, 0,27 mol) à +40 °C. Cette suspension est maintenue à 40-45 °C jusqu'à consommation complète des réactifs (3 heures). Sur ce brut réactionnel sont ajoutés 100 mL de cyclohexane, 127 g de diisopropyléthylamine (0,98 mol) à +20 °C. De l'éthanol anhydre (49,7 g, 1,08 mol) est alors ajouté lentement sur cette masse réactionnelle. La température de la réaction est maintenue à +20 °C pendant 4 heures. L'excès d'éthanol est évaporé sous vide et les sels sont filtrés. 50 ml d'eau sont ajoutés à cette solution organique. Les phases sont séparées, la phase organique est séchée sur sulfate de magnésium et le solvant est évaporé sous vide. Le produit désiré (44,1 g) est alors isolé.

### EXEMPLE 2

### 3-(N-styrylméthyl-2-aminoéthylamino)propyltriéthoxysilane (conforme à la formule (I))

A une solution de N-(2-aminoéthyl)-3-aminopropyltriéthoxysilane (26,4 g, 0,1 mol) dans le méthanol (40 g) sont ajoutés sous agitation et à +20 °C 14 g (0,1 mol) de chlorure de 4-vinyl-benzyle sous atmosphère d'azote. La température du mélange est portée à reflux et maintenue jusqu'à consommation complète des réactifs (3 heures). Après retour de la température du milieu réactionnel à +20 °C, le méthanol est évaporé et le résidu est repris dans 50 mL de toluène. Les sels sont filtrés. Au filtrat sont ajoutés 15 g de carbonate de potassium pour neutraliser le chlorhydrate d'ammonium résiduel. Après agitation à +20 °C pendant 1 heure, les sels sont filtrés et le solvant est évaporé sous vide. 26,4 g du produit désiré sont alors isolés.

### EXEMPLE 3

### N-(3-triéthoxysilylpropyl)-4,5-dihydroimidazole (conforme à la formule (IIIa))

A 80 g de N-(2-aminoéthyl)-3-aminopropyltriéthoxysilane (0,3 mol) sont ajoutés à +20 °C 53,2 g d'orthoformiate d'éthyle (0,36 mol). La température du mélange est portée à reflux jusqu'à ne plus observer de formation d'éthanol. Le mélange réactionnel est alors distillé sous vide partiel (2-5 mbar) et le produit désiré (69,1 g) est récupéré (température : 130-135 °C).

### EXEMPLE 4

### 1-(3-(triéthoxysilyl)propyl)-1H-pyrrole (conforme à la formule (VIc))

A une solution de pyrrole (20 g, 0,3 mol) dans le THF (200 ml) refroidie à -10 °C est ajoutée en 1 heure une solution de butyllithium (1,6 M dans l'hexane, 187 mL, 0,3 mol). Cette solution est maintenue à 0 °C pendant 1 heure. Sur cette solution, 72,3 g de 3-chloroproyltriéthoxysilane (0,3 mol) sont additionnés, puis la température du milieu réactionnel est portée à +65 °C pendant 8 heures. Après retour à 20 °C de la température du milieu réactionnel, le THF est évaporé sous vide. Le brut est repris dans du cyclohexane (150 mL), les sels de chlorure de lithium sont filtrés et la solution aqueuse est lavée avec 50 mL d'eau distillée. La phase organique est séchée sur du sulfate de magnésium et le solvant est évaporé sous vide. Le produit désiré (57,8 g) est alors récupéré.

### EXEMPLE 5

### (3-cyclopentadiénylpropyl)triéthoxysilane (conforme à la formule (VIa))

A du cyclopentadiène fraichement dépolymérisé (120 mL, 1,44 mol) dans du THF anhydre (150 mL) sont ajoutés par fractions sous agitation et à -10 °C, 55 g (1,8 mol) d'hydrure de sodium (NaH) sous atmosphère d'azote. Après maintien de la température du milieu réactionnel à -10 °C pendant 2 heures, l'excès de NaH est décanté et la solution de cyclopentadiénure de sodium est transférée en 2 heures sur une solution de triéthoxychloropropylsilane (313,1 g, 1,3 mol) dans le THF (500 mL). La température du milieu réactionnel ne doit pas excéder +30 °C. Après consommation des réactifs (température du milieu réactionnel : +20 °C), le chlorure de sodium est filtré, le THF évaporé sous vide et le mélange réactionnel brut est distillé sous vide (pression : 500 mbar). Le produit désiré (186,2 g) est isolé (température : +50-60 °C).

### EXEMPLE 6

Cet exemple illustre l'utilisation et le comportement en tant qu'agent de couplage (charge inorganique - élastomère (caoutchouc naturel)) du composé organosilicique fonctionnalisé N-(3-triéthoxysilylpropyl)-4,5-dihydroimidazole (composé de formule (IIIa), utilisation selon l'invention).

### Constitution des compositions élastomériques

Dans un mélangeur interne de type Brabender, on prépare des compositions élastomériques dont la constitution, exprimée en partie en poids pour 100 parties d'élastomères (pce), est indiquée dans le tableau I ci-dessous.

**Tableau I : Formulations utilisées pour les mélanges**

| Compositions | Référence R | Composition I |
|---|---|---|
| NR (1) | 100 | 100 |
| Silice (2) | 50 | 50 |
| Silane 1 (3) | 4,0 | - |
| Silane 2 (4) | - | 4,1 |
| ZnO - 80 % | 5 | 5 |
| Acide stéarique | 2 | 2 |
| Antioxydant (5) | 1,5 | 1,5 |
| Antioxydant (6) | 1,0 | 1,0 |
| CBS - 80 % (7) | 3,13 | 3,13 |
| Soufre - 80 % | 1,88 | 1,88 |

| | | |
|---|---|---|
| (1) Caoutchouc naturel SMR - CV60 (fourni par la société Safic-Alcan) (2) Silice Z1165MP de la société Rhodia (3) TESPT (A-1289 de la société OSi-Witco). (4) N-(3-triéthoxysilylpropyl)-4,5-dihydroimidazole (5) N-1,3-diméthylbutyl-N-phényl-para-phénylènediamine (Santoflex 6-PPD de la société Flexsys) (6) 2,2,4-trimethyl-1H-quinoline (Permanax TQ de la société Flexsys) (7) N-cyclohexyl-2-benzothiazyl-sulfénamide (Rhénogran CBS-80 de la société Bayer). | | |

Les silanes sont utilisés en tant qu'agents de couplage à un taux isomolaire en silicium, c'est-à-dire que l'on utilise le même nombre de moles de fonctions "N" (ici "N" = Si(OC₂H₅)₃) réactives vis-à-vis de la silice et de ses groupes hydroxyles de surface.

### Procédé de préparation des compositions élastomériques

Le procédé de préparation des compositions est conduit en deux phases de préparation successives. Une première phase consiste dans une phase de travail thermomécanique à haute température. Elle est suivie d'une seconde phase de travail mécanique à des températures inférieures à 110 °C ; cette phase permet l'introduction du système de vulcanisation.

La première phase est réalisée dans un mélangeur interne de type Brabender (capacité de 70 mL). Le coefficient de remplissage est de 0,75. La température initiale et la vitesse des rotors sont fixées à chaque fois de manière à atteindre des températures de tombée de mélange voisines de 130-180 °C.

Elle permet d'incorporer l'élastomère (caoutchouc naturel), puis la charge inorganique renforçante constituée par la silice (introduction fractionnée) avec tout ou partie du (ou des) silane(s), puis les divers activateurs de vulcanisation (acide stéarique, oxyde de zinc) et l'agent protecteur (6-PPD). La durée de cette phase est comprise entre 3 et 10 minutes.

Après refroidissement du mélange (température inférieure à 100 °C), la seconde phase permet l'introduction du système de vulcanisation (soufre et accélérateur CBS). Elle est réalisée sur un mélangeur à cylindres, préchauffé à 50 °C. La durée de cette phase est comprise entre 2 et 6 minutes.

Chaque mélange final est ensuite calandré sous la forme de plaques d'épaisseur 2-3 mm.

Sur ces mélanges obtenus dits crus, une évaluation de leurs propriétés rhéologiques permet d'optimiser la durée et la température de vulcanisation.

Ensuite, les propriétés mécaniques et dynamiques des mélanges vulcanisés à l'optimum sont mesurées.

### Propriétés rhéologiques

Les mesures sont réalisées sur les compositions à l'état cru. On a porté dans le tableau II les résultats concernant le test de rhéologie qui est conduit à 150 °C au moyen d'un rhéomètre MDR Monsanto MDR 2000 E selon la norme DIN 53529.

Selon ce test, la composition à tester est placée dans la chambre d'essai régulée à une température de 150 °C durant 30 minutes, et on mesure le couple résistant, opposé par la composition, à une oscillation de faible amplitude (0,5°) d'un rotor biconique inclus dans la chambre d'essai, la composition remplissant complètement la chambre considérée.

A partir de la courbe de variation du couple en fonction du temps, on détermine :
- le couple minimum (S'min) ;
- le couple maximum (S'max) ;
- le delta-couple (ΔS' = S'max - S'min) ;
- le temps T98 nécessaire pour obtenir un état de vulcanisation correspondant à 98 % de la vulcanisation complète (ce temps est pris comme optimum de vulcanisation) ;
- le temps de grillage TS2 correspondant au temps nécessaire pour avoir une remontée de 2 points au-dessus du couple minimum à la température considérée (150 °C) et reflétant le temps pendant lequel il est possible de mettre en œuvre les mélanges crus à cette température sans avoir d'initiation de la vulcanisation (le mélange durcit à partir de TS2).

Les résultats obtenus sont indiqués dans le tableau II.

**Tableau II**

| Compositions | Référence R | Composition I |
|---|---|---|
| S'min (dN.m) | 1,32 | 2,28 |
| S'max (dN.m) | 15,5 | 17,43 |
| Delta couple (dN.m) | 14,18 | 15,15 |
| TS2 (min) | 10,68 | 6,06 |
| T98 (min) | 18,89 | 13,3 |

### Propriétés mécaniques des vulcanisats

Les mesures sont réalisées sur les compositions vulcanisées à l'optimum (T98) pour une température de 150 °C.

Les essais de traction uniaxiale sont réalisés conformément aux indications de la norme NF T 46-002 avec des éprouvettes de type H2 à une vitesse de 500 mm/min sur un appareil Instron 5564. Les modules x % correspondent à la contrainte mesurée à x % de déformation en traction. Il est possible de déterminer un indice de renforcement (I.R.) qui est égal au rapport entre le module à 300 % de déformation et le module à 100% de déformation.

La mesure de dureté Shore A des vulcanisats est réalisée selon les indications de la norme ASTM D 2240. La valeur donnée est mesurée à 15 secondes.

Les propriétés mesurées sont rassemblés dans le tableau III.

**Tableau III**

| Compositions | Référence R | Composition I |
|---|---|---|
| Module 10 % (Mpa) | 0,87 | 0,83 |
| Module 100 % (Mpa) | 3,2 | 2,98 |
| Module 300 % (Mpa) | 14,36 | 17,22 |
| Résistance rupture (Mpa) | 28,7 | 30,3 |
| I.R. | 4,49 | 5,78 |
| Dureté Shore A (pts) | 59 | 58 |

### Propriétés dynamiques des vulcanisats

Les propriétés dynamiques sont mesurées sur un viscoanalyseur (Metravib VA3000), selon la norme ASTM D5992.

Les valeurs de facteur de perte (tan δ) et de module complexe en compression dynamique (E*) sont enregistrées sur des échantillons vulcanisés (éprouvette cylindrique de section 95 mm² et de hauteur 14 mm). L'échantillon est soumis au départ à une prédéformation de 10 %, puis à une déformation sinusoïdale en compression alternée de +/- 2 %. Les mesures sont réalisées à 60 °C et à une fréquence de 10 Hz.

Les résultats, présentés dans le tableau IV, sont le module complexe en compression (E* - 60 °C - 10 Hz) et le facteur de perte (tan δ - 60 °C - 10 Hz).

Les valeurs du facteur de perte (tan δ) et d'amplitude de module élastique en cisaillement dynamique (ΔG') sont enregistrées sur des échantillons vulcanisés (éprouvette parallélépipédique de section 8 mm² et de hauteur 7 mm). L'échantillon est soumis à une déformation sinusoïdale en double cisaillement alternée à une température de 40 °C et à une fréquence de 10 Hz. Le processus de balayage en amplitude de déformations s'effectue selon un cycle aller-retour, allant de 0,1 à 100 % puis retour de 100 à 0,1 %.

Les résultats, présentés dans le tableau IV, sont issus du balayage en amplitude de déformations au retour et concernent la valeur maximale du facteur de perte (tan δ max retour - 40 °C - 10 Hz) ainsi que l'amplitude du module élastique (ΔG' - 40 °C - 10 Hz) entre les valeurs à 0,1 % et 50 % de déformation (effet Payne).

**Tableau IV**

| Compositions | Référence R | Composition I |
|---|---|---|
| E* - 60 °C - 10 Hz (MPa) | 6,70 | 5,99 |
| Tang δ - 60 °C - 10 Hz | 0,073 | 0,053 |
| Tang δ max retour - 40 °C - 10 Hz | 0,117 | 0,116 |
| ΔG' - 40°C - 10 Hz (MPa) | 1,41 | 1,66 |

On constate, à la lecture des résultats des tableaux II à IV, que la composition issue à l'invention (composition I) présente un très bon compromis des propriétés, notamment un meilleur compromis renforcement aux grandes déformations / propriétés ultimes en traction / propriétés hystérétiques à 60 °C par rapport à la composition de référence (référence R).

## Revendications

1. Composition d'élastomère(s) comprenant :
- au moins un élastomère isoprénique,
- au moins une charge inorganique renforçante,
- au moins un composé organosilicique fonctionnalisé à titre d'agent de couplage charge inorganique - élastomère,
**caractérisée en ce que** ledit composé répond à l'une des formules (Ia), (Ib), (Ic), (Id), (IIIa), (IVa), (VIa), (VIb), (VIc) et (VIIa) suivantes : 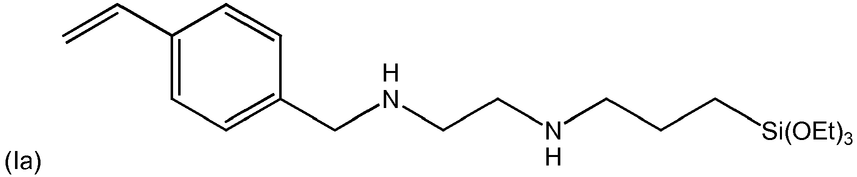 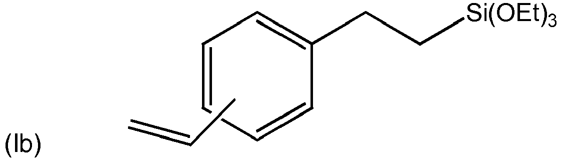 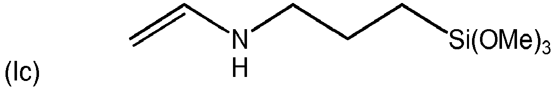 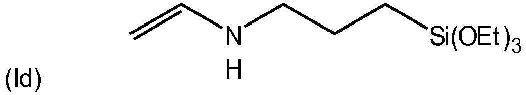 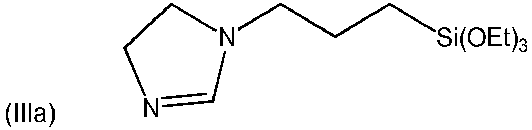 (N-(3-triéthoxysilylpropyl)-4,5-dihydroimidazole)

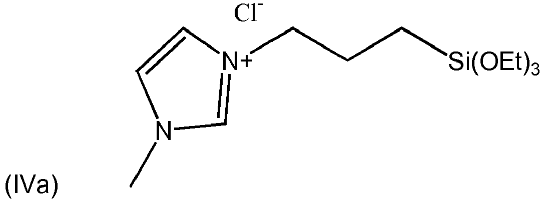

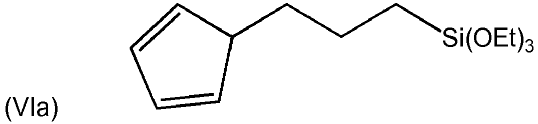

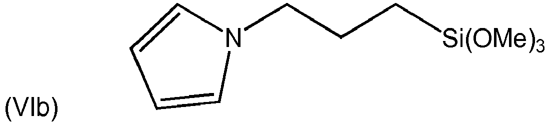

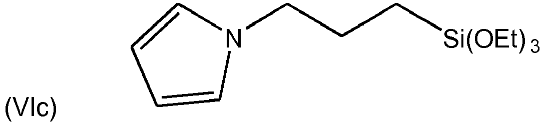

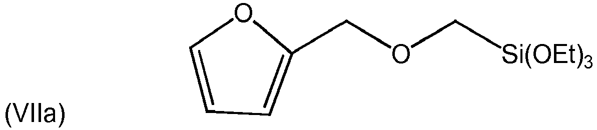

2. Composition selon la revendication 1 **caractérisée en ce que** la charge inorganique renforçante est de la silice, en particulier de la silice précipitée.

3. Composition selon l'une des revendications 1 ou 2, **caractérisée en ce qu'**elle comprend en outre au moins un agent de recouvrement de la charge inorganique renforçante.

4. Composition selon l'une des revendications 1 à 3, **caractérisée en ce qu'**elle comprend en outre au moins un autre agent de couplage charge inorganique - élastomère, de préférence un silane sulfuré ou polysulfuré.

5. Composition selon l'une des revendications 1 à 4, **caractérisée en ce que** ladite composition d'élastomère(s) comprend en outre au moins un élastomère diénique autre qu'isoprénique, la quantité d'élastomère isoprénique par rapport à la quantité totale d'élastomère(s) étant de préférence supérieure à 50 % en poids.

6. Composition selon l'une des revendications 1 à 5, **caractérisée en ce que** l'(les) élastomère(s) isoprénique(s) est (sont) choisi(s) parmi :
(1) les polyisoprènes de synthèse obtenus par homopolymérisation de l'isoprène ou méthyl-2 butadiène-1,3 ;
(2) les polyisoprènes de synthèse obtenus par copolymérisation de l'isoprène avec un ou plusieurs monomères insaturés éthyléniquement choisis parmi :
(2.1) les monomères diènes conjuguées, autres que l'isoprène, ayant de 4 à 22 atomes de carbone ;
(2.2) les monomères vinyles aromatiques ayant de 8 à 20 atomes de carbone
(2.3) les monomères nitriles vinyliques ayant de 3 à 12 atomes de carbone ;
(2.4) les monomères esters acryliques dérivés de l'acide acrylique ou de l'acide méthacrylique avec des alcanols ayant de 1 à 12 atomes de carbone ;
(2.5) un mélange d'au moins deux des monomères précités (2.1) à (2.4) ; les polyisoprènes copolymères contenant entre 20 et 99 % en poids d'unités isopréniques et entre 80 et 1 % en poids d'unités diéniques, vinyles aromatiques, nitriles vinyliques et/ou esters acryliques, et consistant par exemple dans le poly(isoprène-butadiène), le poly(isoprène-styrène) et le poly(isoprène-butadiène-styrène) ;
(3) le caoutchouc naturel ;
(4) les copolymères obtenus par copolymérisation d'isobutène et d'isoprène, ainsi que les versions halogénées de ces copolymères ;
(5) un mélange de d'au moins deux des élastomères précités (1) à (4) ;
(6) un mélange contenant plus de 50 % en poids d'élastomère précité (1) ou (3) et moins de 50 % en poids d'un ou plusieurs élastomères diéniques autres qu'isopréniques.

7. Composition selon la revendication 6, **caractérisée en ce que** l'(les) élastomère(s) isoprénique(s) est (sont) choisi(s) parmi :
(1) les polyisoprènes de synthèse homopolymères ;
(2) les polyisoprènes de synthèse copolymères consistant dans le poly(isoprène-butadiène), le poly(isoprène-styrène) et le poly(isoprène-butadiène-styrène) ;
(3) le caoutchouc naturel ;
(4) le caoutchouc butyle ;
(5) un mélange d'au moins deux des élastomères précités (1) à (4) ;
(6) un mélange contenant plus de 50 % en poids d'élastomère précité (1) ou (3) et moins de 50 % en poids d'élastomère diénique autre qu'isoprénique consistant dans le polybutadiène, le polychloroprène, le poly(butadiène-styrène), le poly(butadiène-acrylonitrile) ou un terpolymère.

8. Composition selon l'une des revendications 1 à 7, **caractérisée en ce que** ladite composition d'élastomère(s) comprend à titre d'élastomère isoprénique au moins du caoutchouc naturel.

9. Article comprenant au moins une composition selon l'une des revendications 1 à 8, cet article consistant en une semelle de chaussures, un revêtement de sols, une barrières aux gaz, un matériau ignifugeant, un galet de téléphériques, un joint d'appareils électroménagers, un joint de conduites de liquides ou de gaz, un joint de système de freinage, un tuyau, une gaine de cables, un cable, un support de moteur, une bande de convoyeur, une courroie de transmissions, ou, de préférence, un pneumatique.

10. Pneumatique selon la revendication 9 pour les véhicules poids lourds.

11. Utilisation comme agent de couplage charge inorganique - élastomère, dans une composition d'élastomère(s) comprenant :
- au moins un élastomère isoprénique,
- au moins une charge inorganique à titre de charge renforçante,
d'au moins un composé organosilicique fonctionnalisé, **caractérisée en ce que** ledit composé est comme definì dans la revendication 1.

12. Utilisation selon la revendication 11, **caractérisée en ce que** la charge inorganique employée à titre de charge renforçante est de la silice, en particulier de la silice précipitée.

13. Utilisation selon l'une des revendications 11 ou 12, **caractérisée en ce que** ledit composé organosilicique fonctionnalisé est mélangé préalablement avec la charge inorganique employée à titre de charge renforçante.

## Patentansprüche

1. Elastomerzusammensetzung, umfassend:
- mindestens ein Isopren-Elastomer,
- mindestens einen verstärkenden anorganischen Füllstoff,
- mindestens eine funktionalisierte Organosiliciumverbindung als Kupplungsmittel für anorganischen Füllstoff - Elastomer,
**dadurch gekennzeichnet, dass** die Verbindung einer der folgenden Formeln (Ia), (Ib), (Ic), (Id), (IIIa), (IVa), (VIa), (VIb), (VIc) und (VIIa) entspricht: 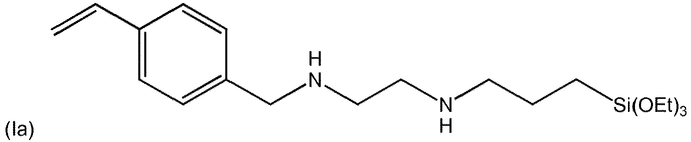 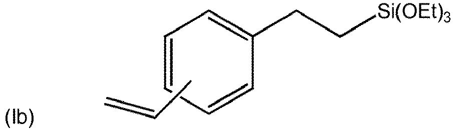 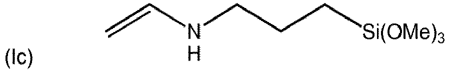 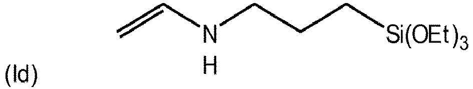 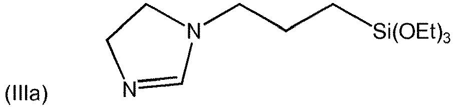 (N-(3-Triethoxysilylpropyl)-4,5-dihydroimidazol)

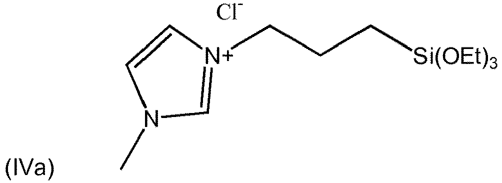

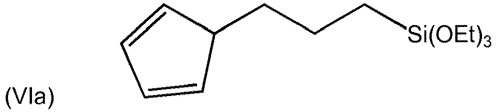

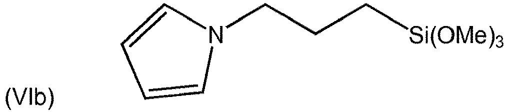

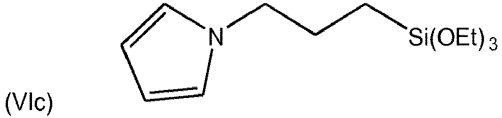

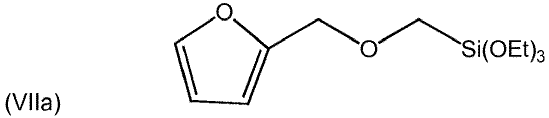

2. Zusammensetzung nach Anspruch 1, **dadurch gekennzeichnet, dass** es sich bei dem verstärkenden anorganischen Füllstoff um Kieselsäure, insbesondere Fällungskieselsäure, handelt.

3. Zusammensetzung nach Anspruch 1 oder 2, **dadurch gekennzeichnet, dass** sie außerdem mindestens ein Mittel zur Bedeckung des verstärkenden anorganischen Füllstoffs umfasst.

4. Zusammensetzung nach einem der Ansprüche 1 bis 3, **dadurch gekennzeichnet, dass** sie außerdem mindestens ein anderes Kupplungsmittel für anorganischen Füllstoff - Elastomer, vorzugsweise ein Silansulfid oder Polysulfid, umfasst.

5. Zusammensetzung nach einem der Ansprüche 1 bis 4, **dadurch gekennzeichnet, dass** die Elastomerzusammensetzung außerdem mindestens ein von Isopren-Elastomer verschiedenes Dienelastomer umfasst, wobei die Menge an Isopren-Elastomer, bezogen auf die Gesamtmenge von Elastomer bzw. Elastomeren, vorzugsweise mehr als 50 Gew.-% beträgt.

6. Zusammensetzung nach einem der Ansprüche 1 bis 5, **dadurch gekennzeichnet, dass** das Isopren-Elastomer bzw. die Isopren-Elastomere aus
(1) synthetischen Polyisoprenen, erhalten durch Homopolymerisation von Isopren oder 2-Methyl-1,3-butadien;
(2) synthetischen Polyisoprenen, erhalten durch Copolymerisation von Isopren mit einem oder mehreren ethylenisch ungesättigten Monomeren, ausgewählt aus:
(2.1) konjugierten Dienmonomeren, die von Isopren verschieden sind, mit 4 bis 22 Kohlenstoffatomen;
(2.2) vinylaromatischen Monomeren mit 8 bis 20 Kohlenstoffatomen;
(2.3) Vinylnitrilmonomeren mit 3 bis 12 Kohlenstoffatomen;
(2.4) Acrylsäureestermonomeren, die sich von Acrylsäure oder Methacrylsäure mit Alkanolen mit 1 bis 12 Kohlenstoffatomen ableiten;
(2.5) einer Mischung von mindestens zwei der oben aufgeführten Monomere (2.1) bis (2.4); wobei die Polyisopren-Copolymere zwischen 20 und 99 Gew.-% Isopren-Einheiten und zwischen 80 und 1 Gew.-% Dien-Einheiten, vinylaromatische Einheiten, Vinylnitril-Einheiten und/oder Acrylsäureester-Einheiten enthalten und beispielsweise aus Poly(isopren-butadien), Poly(isopren-styrol) und Poly(isopren-butadien-styrol) bestehen;
(3) Naturkautschuk;
(4) Copolymeren, erhalten durch Copolymerisation von Isobutylen und Isopren sowie halogenierten Versionen dieser Copolymere;
(5) einer Mischung von mindestens zwei der oben aufgeführten Elastomere (1) bis (4);
(6) einer Mischung, die mehr als 50 Gew.-% des oben aufgeführten Elastomers (1) oder (3) und weniger als 50 Gew.-% eines oder mehrerer von Isopren-Elastomeren verschiedener Dienelastomere enthält;
ausgewählt ist bzw. sind.

7. Zusammensetzung nach Anspruch 6, **dadurch gekennzeichnet, dass** das Isopren-Elastomer bzw. die Isopren-Elastomere aus
(1) synthetischen Polyisopren-Homopolymeren;
(2) synthetischen Polyisopren-Copolymeren, bestehend aus Poly(isopren-butadien), Poly(isopren-styrol) und Poly(isopren-butadien-styrol);
(3) Naturkautschuk;
(4) Butylkautschuk;
(5) einer Mischung von mindestens zwei der oben aufgeführten Elastomere (1) bis (4);
(6) einer Mischung, die mehr als 50 Gew.-% des oben aufgeführten Elastomers (1) oder (3) und weniger als 50 Gew.-% von Isopren-Elastomeren verschiedenes Dienelastomer, das aus Polybutadien, Polychloropren, Poly (butadien-styrol), Poly(butadien-acrylnitril) oder einem Terpolymer besteht;
ausgewählt ist bzw. sind.

8. Zusammensetzung nach einem der Ansprüche 1 bis 7, **dadurch gekennzeichnet, dass** die Elastomerzusammensetzung als Isopren-Elastomer zumindest Naturkautschuk umfasst.

9. Artikel, umfassend mindestens eine Zusammensetzung nach einem der Ansprüche 1 bis 8, wobei dieser Artikel aus einer Schuhsohle, einem Bodenbelag, einer Gasbarriere, einem Flammschutzmaterial, einer Rolle für Seilbahnen, einer Dichtung für Haushaltselektrogeräte, einer Dichtung für Flüssigkeits- oder Gasleitungen, einer Bremssystemdichtung, einem Rohr, einer Kabelummantelung, einem Kabel, einer Motoraufhängung, einem Förderriemen, einem Treibriemen oder vorzugsweise einem Reifen besteht.

10. Reifen nach Anspruch 9 für Schwerlastfahrzeuge.

11. Verwendung mindestens einer funktionalisierten Organosiliciumverbindung als Kupplungsmittel für anorganischen Füllstoff - Elastomer in einer Elastomerzusammensetzung, umfassend:
- mindestens ein Isopren-Elastomer,
- mindestens einen anorganischen Füllstoff als verstärkender Füllstoff,
**dadurch gekennzeichnet, dass** die Verbindung wie in Anspruch 1 definiert ist.

12. Verwendung nach Anspruch 11, **dadurch gekennzeichnet, dass** es sich bei dem als verstärkender Füllstoff eingesetzten anorganischen Füllstoff und Kieselsäure, insbesondere Fällungskieselsäure, handelt.

13. Verwendung nach Anspruch 11 oder 12, **dadurch gekennzeichnet, dass** die funktionalisierte Organosiliciumverbindung vorher mit dem als verstärkenden Füllstoff eingesetzten anorganischen Füllstoff gemischt wird.

## Claims

1. Elastomer composition comprising:
- at least one isoprene elastomer,
- at least one reinforcing in organic filler,
- at least one functionalized organosilicon compound as inorganic filler/elastomer coupling agent,
**characterized in that** the said compound corresponds to one of the following formulae (Ia), (Ib), (Ic), (Id), (IIIa), (IVa), (VIa), (VIb), (VIc) and (VIIa): 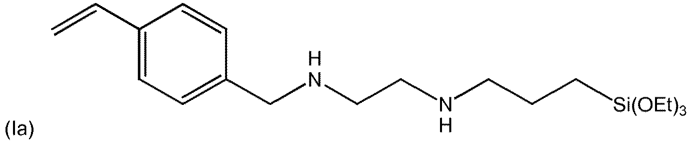 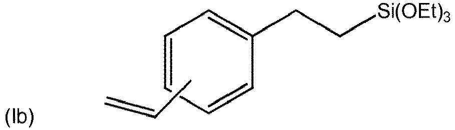 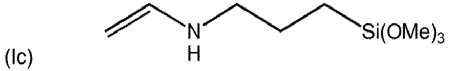 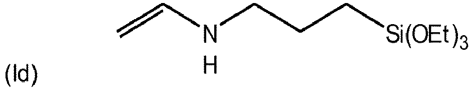 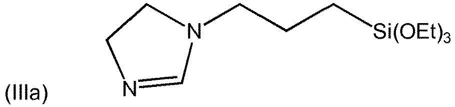 (N-(3-triethoxysilylpropyl)-4,5-dihydroimidazole)

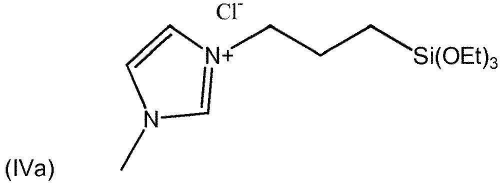

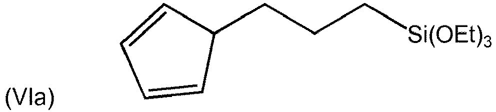

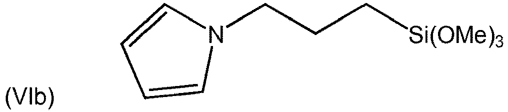

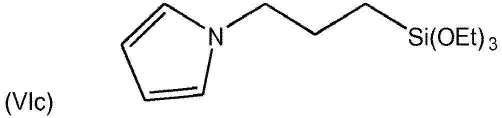

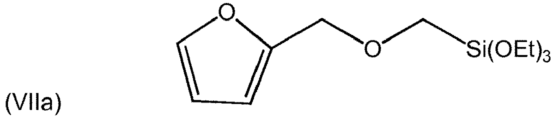

2. Composition according to Claim 1, **characterized in that** the reinforcing inorganic filler is silica, in particular precipitate silica.

3. Composition according to either of Claims 1 and 2, **characterized in that** it additionally comprises at least one agent for covering the reinforcing inorganic filler.

4. Composition according to one of Claims 1 to 3, **characterized in that** it additionally comprises at least one other inorganic filler/elastomer coupling agent, preferably silane sulfide or polysulfide.

5. Composition according to one of Claims 1 to 4, **characterized in that** the said elastomer composition additionally comprises at least one diene elastomer other than an isoprene elastomer, the amount of isoprene elastomer with respect to the total amount of elastomer(s) preferably being greater than 50% by weight.

6. Composition according to one of Claims 1 to 5, **characterized in that** the isoprene elastomer(s) is (are) chosen from:
(1) synthetic polyisoprenes obtained by homopolymerization of isoprene or 2-methyl-1,3-butadiene;
(2) synthetic polyisoprenes obtained by copolymerization of isoprene with one or more ethylenically unsaturated monomers chosen from:
(2.1) conjugated diene monomers, other than isoprene, having from 4 to 22 carbon atoms;
(2.2) vinylaromatic monomers having from 8 to 20 carbon atoms;
(2.3) vinyl nitrile monomers having from 3 to 12 carbon atoms;
(2.4) acrylic ester monomers derived from acrylic acid or from methacrylic acid with alkanols having from 1 to 12 carbon atoms;
(2.5) a mixture of at least two of the abovementioned monomers (2.1) to (2.4); polyisoprene copolymers containing between 20% and 99% by weight of isoprene units and between 80% and 1% by weight of diene, vinylaromatic, vinyl nitrile and/or acrylic ester units, and consisting, for example, of poly(isoprene/butadiene), poly(isoprene/styrene) and poly(isoprene/butadiene/styrene) ;
(3) natural rubber;
(4) copolymers obtained by copolymerization of isobutene and isoprene, and also the halogenated versions of these copolymers;
(5) a mixture of at least two of the abovementioned elastomers (1) to (4);
(6) a mixture containing more than 50% by weight of abovementioned elastomer (1) or (3) and less than 50% by weight of one or more diene elastomers other than isoprene elastomers.

7. Composition according to Claim 6, **characterized in that** the isoprene elastomer(s) is (are) chosen from:
(1) synthetic polyisoprene homopolymers;
(2) synthetic polyisoprene copolymers consisting of poly(isoprene/butadiene), poly(isoprene/styrene) and poly(isoprene/butadiene/styrene) ;
(3) natural rubber;
(4) butyl rubber;
(5) a mixture of at least two of the abovementioned elastomers (1) to (4);
(6) a mixture containing more than 50% by weight of abovementioned elastomer (1) or (3) and less than 50% by weight of diene elastomer other than isoprene elastomer consisting of polybutadiene, polychloroprene, poly(butadiene/styrene), poly(butadiene/acrylonitrile) or a terpolymer.

8. Composition according to one of Claims 1 to 7, **characterized in that** the said elastomer composition comprises, as isoprene elastomer, at least natural rubber.

9. Article comprising at least one composition according to one of Claims 1 to 8, this article consisting of a footwear sole, a floor covering, a gas barrier, a flame-retardant material, a roller for cableways, a seal for domestic electrical appliances, a seal for liquid or gas pipes, a braking system seal, a pipe, a cable sheathing, a cable, an engine support, a conveyor belt, a transmission belt or, preferably, a tyre.

10. Tyre according to Claim 9 for heavy-duty vehicles.

11. Use, as inorganic filler/elastomer coupling agent in an elastomer composition comprising:
- at least one isoprene elastomer,
- at least one inorganic filler as reinforcing filler,
of at least one functionalized organosilicon compound, **characterized in that** the said compound is as defined in Claim 1.

12. Use according to Claim 11, **characterized in that** the inorganic filler employed as reinforcing filler is silica, in particular precipitated silica.

13. Use according to either of Claims 11 and 12, **characterized in that** the said functionalized organosilicon compound is mixed beforehand with the inorganic filler employed as reinforcing filler.
